Europäisches Patentamt

European Patent Office

Office européen des brevets

(11) Veröffentlichungsnummer: **0 270 784 B1**

(12) **EUROPÄISCHE PATENTSCHRIFT**

(45) Veröffentlichungstag der Patentschrift: **07.08.91**

(51) Int. Cl.5: **F02M 35/10, F02B 27/02**

(21) Anmeldenummer: **87115409.2**

(22) Anmeldetag: **21.10.87**

(54) **Ansauganlage für eine mehrzylindrige Brennkraftmaschine.**

(30) Priorität: **06.12.86 DE 3641812**

(43) Veröffentlichungstag der Anmeldung:
**15.06.88 Patentblatt 88/24**

(45) Bekanntmachung des Hinweises auf die
Patenterteilung:
**07.08.91 Patentblatt 91/32**

(84) Benannte Vertragsstaaten:
**DE ES FR GB IT SE**

(56) Entgegenhaltungen:
**EP-A- 0 054 964      EP-A- 0 223 378**
**DE-A- 2 339 356      DE-A- 2 744 039**
**US-A- 2 845 912      US-A- 4 317 438**

**PATENT ABSTRACTS OF JAPAN, Band 7, Nr.
227 (M-248)[1372], 7. Oktober 1983**

**idem**

**PATENT ABSTRACTS OF JAPAN, Band 6, Nr.
153 (M-149)[1031], 13. August 1982**

**PATENT ABSTRACTS OF JAPAN, Band 5, Nr.
174, (M-96)[846], 10. November 1981**

**PATENT ABSTRACTS OF JAPAN, Band 8, Nr.**

**146 (M-307)[1583], 7. Juli 1984**

(73) Patentinhaber: **Dr.Ing.h.c. F. Porsche Aktiengesellschaft
Porschestrasse 42
W-7000 Stuttgart 40(DE)**

(72) Erfinder: **Ampferer, Herbert, Dipl.-Ing. FH
Metternzimmerer Strasse 24
W-7123 Sachsenheim 2(DE)**

## Beschreibung

Die Erfindung betrifft eine Ansauganlage für eine mehrzylindrige Brennkraftmaschine eines Personenwagens, die pro Zylinder zwei Einlaßventile und zwei mindestens abschnittsweise getrennte erste Ansaugkanäle aufweist, welche Ansaugkanäle Bestandteil eines Zylinderkopfs, auf einer gemeinsamen, senkrecht zu einer Zylinderachse verlaufenden Ebene angeordnet und an die Ansauganlage angeschlossen sind, wobei in wenigstens einem bogenförmig vom Zylinderkopf weggeführten Rohrkörperstück der Ansauganlage zweite Ansaugkanäle fortgeführt sind, die einen ineinander verschränkten Verlauf aufweisen, dergestalt, daß in einer entfernt vom Zylinderkopf liegenden Ebene des Rohrkörperstücks die zweiten Kanäle - in Querrichtung Brennkraftmaschine gesehen - nebeneinander liegen.

Eine Ansauganlage dieser Bauart geht aus der JP-A-58-119958 hervor, wobei pro Zylinder zwei getrennte, bogenförmige Saugrohre vorgesehen sind, die sich zwischen einer Kraftstoff-Luft-Gemisch-Zuführungseinrichtung und einem Zylinderkopf erstrecken. Eine vergleichbare Ausführung geht aus der JP-A-57-070947 hervor.

Die JP-A-56-101055 zeigt eine Brennkraftmaschine mit zwei V-förmigen Zylinderreihen, deren einander zugekehrte Ansaugkanäle von einer in einem Raum zwischen den Zylinderreihen angeordneten Saugrohranlage mit Kraftstoff-Luft-Gemisch versorgt werden. Etwa baugleich sind die Brennkraftmaschinen nach der DE-A 27 44 039 und US-A 2,845,912.

Aufgabe der Erfindung ist es, eine an einer Brennkraftmaschine gehaltene Ansauganlage zu schaffen, die bei guter Funktion räumlich günstige Abmessungen aufweist.

Erfindungsgemäß wird diese Aufgabe durch die kennzeichnenden Merkmale des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß durch den verschränkten Verlauf der Kanäle im Rohrkörperstück die Ansauganlage - in Längsrichtung Brennkraftmaschine gesehen - wenig Raum beansprucht, was namentlich für Brennkraftmaschinen mit V-förmig verlaufenden Zylinderreihen bedeutsam ist. Das separate Rohrkörperstück vereinfacht die Herstellung der Ansauganlage. Die Kanäle der Ansauganlage, die unterschiedliche Länge aufweisen, lassen sich auf einfache Weise in die Ansauganlage integrieren.

Die Ansauganlage eignet sich für Brennkraftmaschinen mit V-förmigen Zylinderreihen, die im Bug eines Personenwagens quer eingebaut sind, wobei sich ein wesentlicher Teilbereich der Ansauganlage benachbart von einer Haube der hinteren Zylinderreihe erstreckt. Dadurch wird der Raum zwischen Brennkraftmaschine und Aufbau eines Personenwagens gut genutzt. Darüber hinaus stellen die Durchgangskanäle in der Ansauganlage sicher, daß Zündkerzen der Brennkraftmaschine ohne Demontage der Ansauganlage zugänglich sind. Schließlich trägt die schwingungsentkoppelte Lagerung der Ansauganlage zur Geräuschreduktion der Brennkraftmaschine bei.

In der Zeichnung wird ein Ausführungsbeispiel der Ansauganlage gezeigt, das nachstehend näher beschrieben ist.
Es zeigt

Fig. 1    eine Ansicht der Brennkraftmaschine, teilweise im Schnitt, und von einer Stirnseite aus betrachtet,

Fig. 2    einen Schnitt nach der Linie II-II der Fig. 1 in größerem Maßstab,

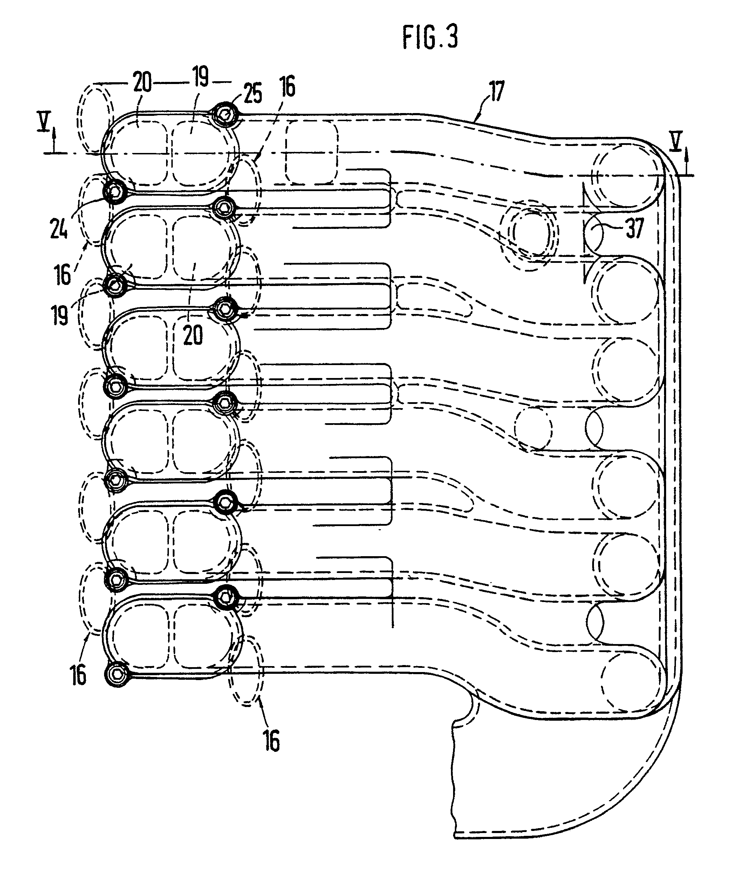

Fig. 3    eine Ansicht in Pfeilrichtung A der Fig. 1,

Fig. 4    einen Schnitt nach der Linie IV-IV der Fig. 1 in größerem Maßstab,

Fig. 5    einen Schnitt nach der Linie V-V der Fig. 3 in größerem Maßstab.

Eine mehrzylindrige Brennkraftmaschine 1 umfasst zwei Zylinderreihen 3, 4, deren Zylinder-Mittelachsen 5, 6 V-förmig zueinander angeordnet sind. Die Zylinderreihen 3, 4 weisen Zylinderköpfe 7, 8 auf, die pro Zylinder mit zwei Einlaßventilen 9 ausgestattet sind, wobei die Einlaßventile 9 Gasströme zu einem Brennraum 10 steuern, die über zwei getrennte Ansaugkanäle 11, 12 dorthin gelangen. Die Ansaugkanäle 11, 12 sind Bestandteil des Zylinderkopfs 7 und liegen mit Eintrittsöffnungen 13, 14 auf einer gemeinsamen, parallel zu einer nicht gezeigten Kurbelwellen-Längsmittelachse verlaufenden Ebene B-B, die sich senkrecht zu einer Zylinderlängsmittelachse C-C erstreckt. Aus dem Zylinderkopf 7 seitlich herausgeführt sind Rohrstutzen 15, die Verlängerungen der Ansaugkanäle 11, 12 sind und an Rohrkörperstücke 16 einer Ansauganlage 17, und zwar unter Vermittlung muffenartiger, aus elastischem Werkstoff bestehender Verbindungselemente 18 angeschlossen sind.

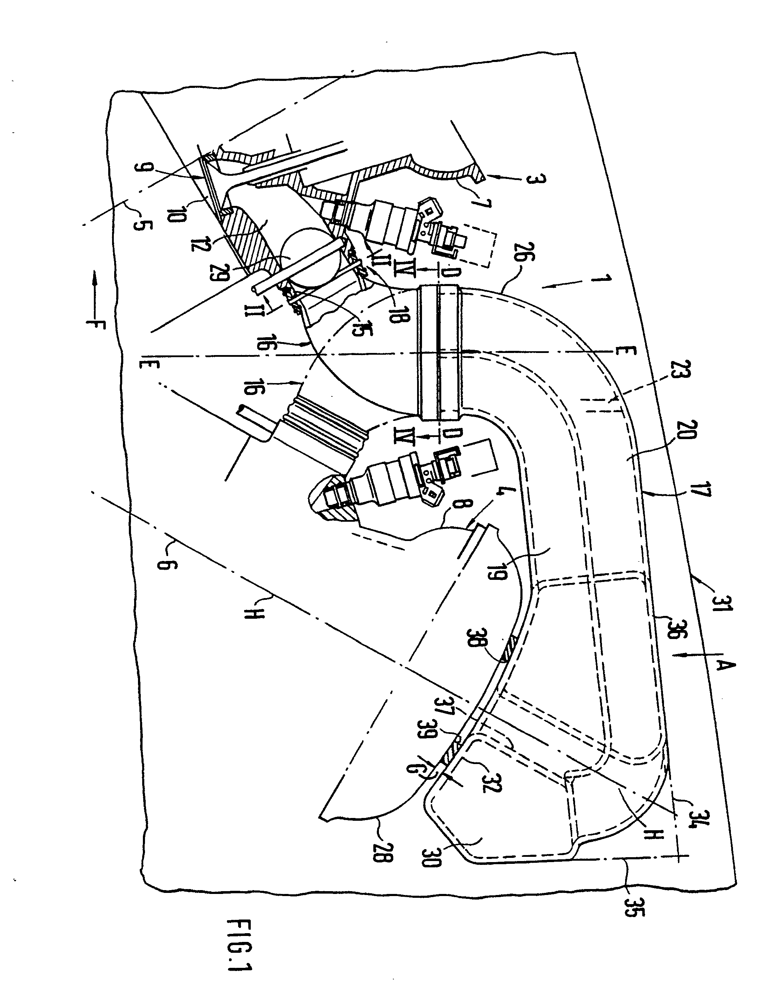

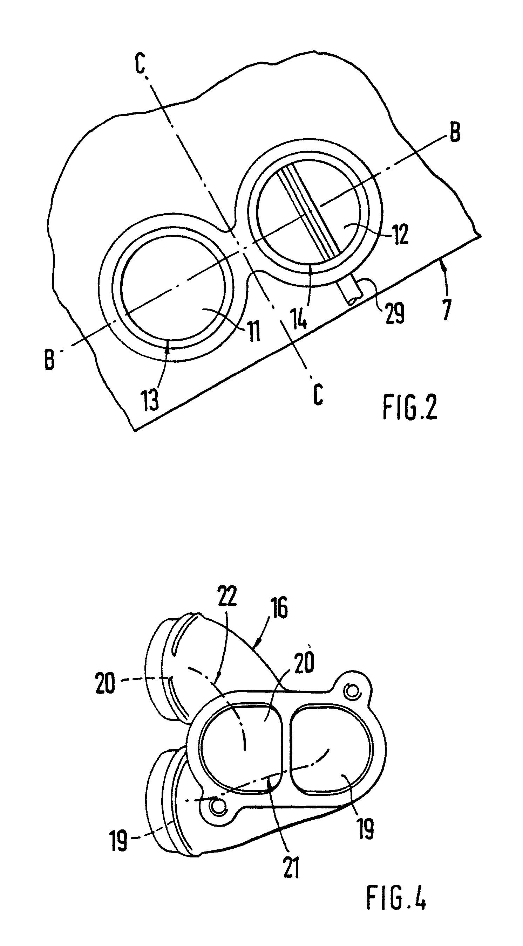

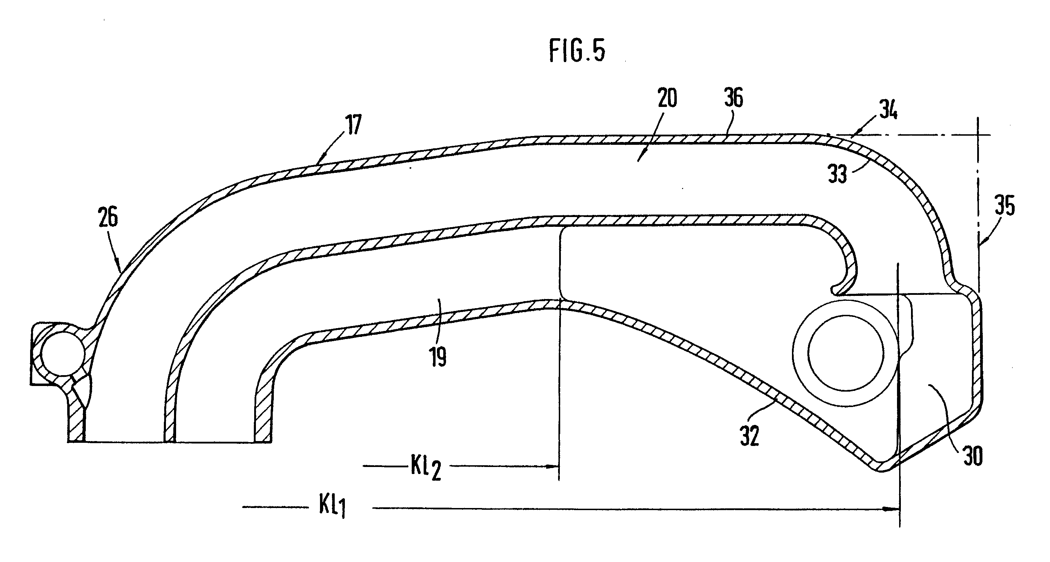

In den Rohrkörperstücken 16, die bogenförmig vom Zylinderkopf 7 weggeführt sind, sind getrennte Kanäle 19, 20 fortgeführt, die einen verschränkten Verlauf - siehe Mittelachsen 21, 22 der Kanäle 19, 20 in Fig. 4 -aufweisen. Der verschränkte Verlauf der Kanäle 19, 20 ist derart gestaltet, daß sie - in Querrichtung der Brennkraftmaschine 1 gesehen - in einer entfernt vom Zylinderkopf 7 oder 8 liegenden horizontalen Ebene D-D des Rohrkörperstücks 16 nebeneinanderliegen (Fig. 1 und 4). Anders ausgedrückt, die Kanäle 19, 20 haben einen unterschiedlichen Abstand zu den Zylinderköpfen 7, 8.

Pro Zylinder ist ein Rohrkörperstück 16 vorgesehen, das sich zwischen dem Zylinderkopf 7 oder 8 und der Ebene D-D erstreckt und getrennt von einem Teil 23 der Ansauganlage 17 hergestellt ist. Das Rohrkörperstück 16 ist mit dem Teil 23 durch Schrauben 24, 25 miteinander verbunden. Außerdem ist es so gestaltet, daß es als Gleichteil für die verschiedenen Zylinder beider Zylinderreihen 3, 4 verwendbar ist.

Die Ansauganlage 17 weist im Anschluß an die Rohrkörperstücke 16 einen Rohrbogen 26 auf, wodurch die getrennten Kanäle 19, 20 umgelenkt werden. Sie verlaufen folglich in einem sich quer zur Brennkraftmaschine erstreckenden Abschnitt 17 übereinanderliegend. Die Kanäle 19, 20 weisen zur Erhöhung des Drehmoments der Brennkraftmaschine 1 bei definierten Betriebsbedingungen unterschiedliche Längen - $Kl_1$ und $Kl_2$ - auf (Fig. 5). Dabei erstreckt sich der längere Kanal 20 entfernt von einer Haube 28, die den Zylinderkopf 8 überdeckt , d.h. bei üblicher Einbaulage einer Brennkraftmaschine (= Zylinder stehen aufrecht) erstreckt sich der Kanal 20 über dem Kanal 19. Übrigens ist der kürzere Kanal 19 - $Kl_2$ - bei niederer Drehzahl der Brennkraftmaschine geschlossen und bei höherer Drehzahl geöffnet, was durch eine Klappe 29 im Zylinderkopf 7 - Fig. 1 und 2 -bewerkstelligt wird. Beide Kanäle 19 und 20 münden in einen Verteilerraum 30, der in die Ansauganlage 17 integriert ist.

Gemäß Fig. 1 ist die Brennkraftmaschine 1 quer in den Bug eines nicht näher dargestellten Personenwagens eingebaut, derart, daß die Zylinderreihen 3, 4 im gleichen Winkel zu einer senkrechten Querebene E-E des Personenwagens verlaufen, wobei in Fahrtrichtung F des Personenwagens gesehen die Zylinderreihe 3 vorne und die Zylinderreihe 4 hinten liegt. Die Ansauganlage 17 verläuft - in Querrichtung Brennkraftmaschine 1 gesehen -oberhalb der hinteren Zylinderreihe 4 um den Raum zwischen der Zylinderreihe 4 und einer Karosseriekontur 31 (Motorhaube) zu nutzen. Dabei verläuft die Ansauganlage 17 mit einer ersten Wand 32 abschnittsweise mit geringem Abstand G zur Haube 28. Über der ersten Wand 32 erstreckt sich eine zweite Wand 33, die einen durch Hilfslinien 34, 35 festgelegten dachförmigen Verlauf aufweist. Ein Wandabschnitt 36, der durch die Hilfslinie 34 definiert ist, verläuft benachbart der Karosseriekontur 31.

Die Zylinderreihe 4 weist pro Zylinder eine Zündkerze auf - nicht dargestellt - die in einer Mittellängsebene H-H der Brennkraftmaschine angeordnet und über die Haube 28 zugänglich ist. Damit zum Prüfen oder Wechseln der Zündkerze die Ansauganlage 17 nicht demontiert werden muß, ist in dieser im Bereich der Zündkerze ein Durchgangskanal 37 vorgesehen.

Darüber hinaus ist die Ansauganlage 17 schwingungsentkoppelt an der Brennkraftmaschine 1 gehalten. Hierzu ist sie einerseits mit den Verbindungselementen 18 mit der Brennkraftmaschine verbunden und andererseits stützt sie sich unter Vermittlung von elastischen Elementen 38, 39 und der besagten Maschine ab.

## Patentansprüche

1. Ansauganlage für eine mehrzylindrige Brennkraftmaschine eines Personenwagens, die pro Zylinder zwei Einlaßventile und zwei zumindest abschnittsweise getrennte erste Ansaugkanäle aufweist, welche Ansaugkanäle Bestandteil eines Zylinderkopfs, auf einer gemeinsamen, senkrecht zu einer Zylinderachse verlaufenden Ebene angeordnet und an die Ansauganlage angeschlossen sind, wobei in wenigstens einem bogenförmig vom Zylinderkopf weggeführten Rohrkörperstück der Ansauganlage zweite Ansaugkanäle fortgeführt sind, die einen ineinander verschränkten Verlauf aufweisen, dergestalt, daß in einer entfernt vom Zylinderkopf liegenden Ebene des Rohrkörperstücks die zweiten Kanäle - in Querrichtung Brennkraftmaschine gesehen - nebeneinander liegen, **gekennzeichnet** durch folgende Merkmale:
   - mehrere Rohrkörperstücke (16) liegen zwischen V-förmigen Zylinderreihen (3, 4) der Brennkraftmaschine;
   - jedes sich zwischen Zylinderköpfen (7, 8) und der Ebene (D-D) erstreckende Rohrkörperstück (16) ist getrennt von der Ansauganlage (17) hergestellt und mit dieser durch Schrauben (24, 25) verbunden;
   - die Rohrkörperstücke (16) der Ansauganlage (17) für die verschiedenen Zylinder (Zylinderreihen 3, 4) sind durch Gleichteile gebildet;
   - die Ansauganlage (17) weist im Anschluß an jedes Rohrkörperstück (16) einen Rohrbogen (26) auf, dergestalt, daß die zweiten Ansaugkanäle (19, 20) in einem quer zur Brennkraftmaschine (1) verlaufenden Abschnitt (27) der Ansauganlage (17) übereinanderliegend verlaufen.

2. Ansauganlage nach Anspruch 1, bei der die getrennten Kanäle unterschiedliche Länge aufweisen, **dadurch gekennzeichnet,** daß der längere Kanal (19) sich entfernt von einer Haube (28) der Brennkraftmaschine (1) erstreckt.

3. Ansauganlage nach einem oder mehreren der vorangehenden Ansprüche, **dadurch gekennzeichnet,** daß die Kanäle (19, 20) in einen Verteilerraum (30) der Ansauganlage (17) münden.

4. Ansauganlage nach einem oder mehreren der vorangehenden Ansprüche, die einer Brennkraftmaschine zugeordnet ist, die in einer Mittellängsebene der Zylinder angeordnete, über Ausnehmungen in der Haube zugängliche Zündkerzen aufweist, **dadurch gekennzeichnet,** daß die Ansauganlage (17) im Bereich der Zündkerzen Durchgangskanäle (37) aufweist.

5. Ansauganlage nach einem oder mehreren der vorangehenden Ansprüche, **dadurch gekennzeichnet,** daß die Ansauganlage (17) schwingungsentkoppelt an der Brennkraftmaschine gehalten ist, wobei zwischen den Rohrkörperstücken (16) und Rohrstützen (15) des Zylinderkopfs (7) muffenartige Verbindungselemente (18) aus elastischem Werkstoff vorgesehen sind und sich die Ansauganlage (17) unter Vermittlung elastischer Elemente (38, 39) an der Brennkraftmaschine abstützt.

## Claims

1. A suction unit for a multi-cylinder internal-combustion engine of a passenger car, which, per cylinder, has two inlet valves and two first suction channels which are divided into portions at least, are component part of a cylinder head, are arranged in a common plane which extends normal to a cylinder axis and are connected to the suction unit, second suction channels being guided away in at least one pipe body piece - guided away from the cylinder head in an arcuate manner - of the suction unit, which second suction channels extend interlaced, in such a manner that the second channels lie side-by-side (seen in the transverse direction of the internal-combustion engine) in a plane - lying at a distance from the cylinder head - of the pipe body piece, characterised by the following features:
   - several pipe body pieces (16) lie between V-shaped cylinder rows (3, 4) of the internal-combustion engine;
   - each pipe body piece (16) extending between cylinder heads (7, 8) and the plane (D-D) is produced separately from the suction unit (17) and connected to the latter by screws (24, 25);
   - the pipe body pieces (16) of the suction unit (17) for the different cylinders (cylinder rows 3, 4) are formed from equal parts;
   - the suction unit (17) has a pipe bend (26) next to each pipe body piece (16), in such a manner that the second suction channels (19, 20) extend in a superimposed manner in a portion (27) - extending crosswise to the internal-combustion engine (1) - of the suction unit (17).

2. A suction unit according to Claim 1, in which the divided channels have different lengths, characterised in that the longer channel (19) extends at a distance from a hood (28) of the internal-combustion engine (1).

3. A suction unit according to one or more of the preceding Claims, characterised in that the channels (19, 20) discharge into a distributor space (30) of the suction unit (17).

4. A suction unit according to one or more of the preceding Claims, which suction unit is assigned to an internal-combustion engine which has spark plugs which are arranged in a central longitudinal plane of the cylinder and which are accessible via recesses in the hood, characterised in that the suction unit (17) has through channels (37) in the region of the spark plugs.

5. A suction unit according to one or more of the preceding Claims, characterised in that the suction unit (17) is held on the internal-combustion engine so as to be vibrationally decoupled, sleeve-shaped connecting elements (18) made of resilient material being provided between the pipe body pieces (16) and pipe supports (15) of the cylinder head (7) and the suction unit (17) resting on the internal-combustion engine through the intermediary of elastic elements (38, 39).

## Revendications

1. Système d'aspiration pour un moteur à combustion interne multicylindres d'une voiture particulière, qui comprend par cylindre deux soupapes d'admission et deux premières canalisations d'aspiration au moins en partie séparées, les canalisations d'aspiration qui font partie d'une tête de cylindre étant disposées dans un plan commun perpendiculaire à un axe de cylindre et étant raccordées au système d'aspiration, des secondes canalisations d'aspiration prolongées par au moins un élément de corps tubulaire de forme coudée partant de la tête de cylindre, qui présentent des parcours entrelacés de manière que dans un plan de l'élément de corps tubulaire éloigné de la tête de cylindre, les secondes canalisations soient situées l'une contre l'autre -vues dans la direction transversale du moteur à combustion interne, caractérisé par les caractéristiques suivantes:

- plusieurs éléments de corps tubulaires (16) sont disposés entre les rangées de cylindres de forme en V (3, 4) du moteur à combustion interne;

- chaque élément de corps tubulaire (16) qui s'étend entre les têtes de cylindres (7, 8) et le plan (D-D) est réalisé séparément du système d'aspiration (17) et relié à ce dernier par des boulons (24, 25);

- les éléments de corps tubulaires (16) du système d'aspiration (17) destinés aux divers cylindres (rangées de cylindres 3, 4) sont formés par des mêmes éléments;

- le système d'aspiration (17) présente à la suite de chaque élément de corps tubulaire (16) un tube coudé (26) de manière que les secondes canalisations d'aspiration (19, 20) soient disposées l'une au-dessus de l'autre dans une section (27) du système d'aspiration (17) qui est transversale au moteur à combustion interne.

2. Système d'aspiration selon la revendication 1, dans lequel les canalisations séparées sont de longueurs différentes, caractérisé en ce que la canalisation la plus longue (19) s'étend à une certaine distance d'un capot (28) du moteur à combustion interne (1).

3. Système d'aspiration selon une ou plusieurs des revendications précédentes, caractérisé en ce que les canalisations (19, 20) débouchent dans un espace distributeur (30) du système d'aspiration (17).

4. Système d'aspiration selon une ou plusieurs des revendications précédentes, associé à un moteur à combustion interne, comprenant des bougies disposées dans un plan longitudinal médian des cylindres et accessibles par des évidements constitués dans le capot, caractérisé en ce que le système d'aspiration (17) comprend des passages (37) dans la région des bougies.

5. Système d'aspiration selon une ou plusieurs des revendications précédentes, caractérisé en ce que le système d'aspiration (17) est monté sur le moteur à combustion interne de façon à être désaccouplé des oscillations, en prévoyant entre les éléments de corps tubulaires (16) et les tubulures (15) de la tête de cylindre (7) des éléments de liaison du type manchon (18) en matière élastique, et en faisant en sorte que le système d'aspiration (17) s'appuie sur le moteur à combustion interne par l'intermédiaire d'éléments élastiques (38, 39).

FIG.1

EP 0 270 784 B1

FIG.2

FIG.4

7

FIG.3

FIG.5